# FASCICULE DE BREVET EUROPEEN

(11) **EP 2 700 883 B1**
(45) Date de publication et mention de la délivrance du brevet: **13.12.2017**
(21) Numéro de dépôt: 13181402.2
(22) Date de dépôt: 22.08.2013
(51) Int. Cl.: F24D 17/02, F24D 17/00, F24D 3/08, F24D 11/02

(54) **Système hybride de production d'eau chaude sanitaire à pompe à chaleur et chaudière**
Hybridsystem zur sanitären Heißwassererzeugung mit einer Wärmepumpe und einem Heizkessel
Hybrid system for producing domestic hot water with a heat pump and a boiler

(30) Priorité: 22.08.2012 FR 1257934
(43) Date de publication de la demande: 26.02.2014
(73) Titulaire: BDR Thermea Group, 67580 Mertzwiller (FR)
(72) Inventeur: Vacher, Sébastien, 67580 MERTZWILLER (FR); Lichtenberger, Yves, 67580 MERTZWILLER (FR)
(74) Mandataire: Littolff, Denis

(56) Documents cités:
- EP-A2- 2 455 696
- WO-A1-03/010469

## Description

La présente invention concerne principalement un système hybride de production d'eau chaude sanitaire instantanée à partir de l'eau du réseau, fonctionnant en utilisant simultanément une chaudière et une pompe à chaleur. La vocation première d'un tel système est de réaliser une régulation de la température d'eau chaude sanitaire permettant la mise en oeuvre de :
- la combinaison la plus efficace en termes de rendement ; et/ou
- la combinaison la plus économique en termes de coût d'exploitation ; et/ou encore
- la combinaison la plus respectueuse de l'environnement pour ce qui concerne les rejets de CO₂.

Il est notoire que les pompes à chaleur offrent une alternative économique très intéressante aux systèmes de chauffages existants, notamment parce que leur rendement de fonctionnement est supérieur à celui des chauffages traditionnels, conduisant à des gains patents sur le plan de la consommation. Sur un plan environnemental, l'utilisation de pompe à chaleur n'implique par ailleurs ni rejet, ni combustible, et elle peut donc par conséquent également être considérée comme s'inscrivant dans une perspective technique favorable, à l'aune des nouvelles tendances et en regard des évolutions inévitables à prévoir dans ce domaine.

C'est la raison pour laquelle son emploi de la manière la plus extensive possible pour la production d'eau chaude sanitaire instantanée est recherché. A ce jour, il existe d'ailleurs déjà des dispositifs basés sur une pompe à chaleur et qui produisent de l'eau chaude sanitaire via un stockage au moyen d'un ballon dont la capacité est de l'ordre de 100 L à 300 L. Des installations combinant une chaudière, qui produit de l'eau chaude, et une pompe à chaleur sont par ailleurs présentes sur le marché, mais dans lesquelles la pompe à chaleur dernière ne participe pas à la production d'eau chaude sanitaire instantanée. Son utilisation est en fait réservée aux usages traditionnels d'eau chauffée et stockée dans les ballons à grands volumes précités, dans un fonctionnement qui relève par conséquent de la production par accumulation et non d'une production instantanée. Un système hybride de production d'eau chaude selon le préambule de la revendication 1 est décrit dans WO 03/010469A1. L'objectif de l'invention est d'améliorer les performances notamment économiques de la production d'eau chaude sanitaire instantanée, en utilisant un système hybride dans lequel la pompe à chaleur participe autant que possible et avec toute l'amplitude possible à la production en temps réel d'une telle eau. Le but est que l'utilisateur dispose d'une installation aussi performante qu'auparavant, qui lui coûte cependant moins cher à l'utilisation du fait de l'existence de la pompe à chaleur. L'idée générale est donc de recourir de manière optimale aux qualités intrinsèques de la pompe à chaleur dans la production d'eau chaude sanitaire instantanée. Un autre objectif de l'invention est d'améliorer l'intégration du système en proposant par conséquent une installation de volume aussi réduit que possible, par exemple intégrable dans l'habillage d'une chaudière murale.

Enfin, le système hybride de production d'eau chaude sanitaire de l'invention fonctionne comme dit à partir d'une chaudière et d'une pompe à chaleurs par ailleurs utilisées dans un circuit hydraulique de production d'eau chaude de chauffage d'un local. La chaudière est alors classiquement associée à la pompe à chaleur via un collecteur hydraulique, par exemple un tube à 2 piquages, placé en aval de la chaudière et de la pompe à chaleur, une sortie du collecteur hydraulique alimentant les émetteurs du circuit de chauffage (en l'occurrence classiquement des radiateurs) qui rebouclent ensuite vers la pompe à chaleur.

L'invention se caractérise en fait en ce que le système hybride de production d'eau chaude sanitaire instantanée, qui comporte classiquement le secondaire d'un échangeur instantané d'eau chaude sanitaire de la chaudière, comporte au surplus le secondaire d'un échangeur additionnel placé en série avec ledit secondaire de l'échangeur de la chaudière, le primaire de l'échangeur additionnel étant disposé dans une branche de dérivation du circuit de production d'eau chaude comportant un ballon de stockage d'eau chaude, ladite branche de dérivation étant raccordée au secondaire de l'échangeur de la pompe à chaleur en parallèle avec les émetteurs du circuit hydraulique de production d'eau chaude de chauffage.

En d'autres termes, la branche de dérivation placée dans le circuit de production d'eau de chauffage permet d'intégrer autant que possible les effets de la pompe à chaleur dans le circuit de production d'eau chaude sanitaire, la pompe à chaleur étant alors également utilisée à des fins de production d'énergie restituable à l'eau chaude sanitaire. En fait, de même que le circuit hydraulique de chauffage est hybride car comportant deux moyens de chauffage, respectivement la pompe à chaleur et la chaudière, le circuit de production d'eau chaude sanitaire reprend potentiellement cette même caractéristique avec deux échangeurs respectivement tributaires de l'énergie de la chaudière et de la pompe à chaleur. On verra cependant dans la suite que leur fonctionnement simultané n'est pas toujours nécessaire.

Selon une première configuration, le ballon de stockage peut être placé en série avec le primaire de l'échangeur additionnel. Dans ce cas, le ballon de stockage est de préférence, selon l'invention, disposé horizontalement, pour faciliter son intégration, et il peut comporter au moins une paroi interne d'allure horizontale afin de limiter le mélange d'eau dans le ballon.

Dans les versions à ballon de stockage placé en série avec l'échangeur additionnel, ce dernier est de préférence un échangeur à plaques.

Selon une configuration alternative de l'invention, le ballon de stockage peut représenter le primaire de l'échangeur additionnel, dont le secondaire est constitué d'une tubulure se développant par exemple sous forme de serpentin en traversant ledit ballon. L'eau sanitaire est alors réchauffée en passant dans le serpentin.

Selon encore une autre configuration alternative, le ballon de stockage de la branche de dérivation peut représenter le secondaire de l'échangeur additionnel, dont le primaire est constitué d'une tubulure se développant par exemple sous une forme de serpentin dans ledit ballon. L'eau sanitaire est alors stockée dans le ballon et réchauffée par l'eau issue de la pompe à chaleur circulant dans le serpentin.

Pour gérer les débits d'eau dans les deux voies parallèles créées par la mise en oeuvre de la branche de dérivation, une vanne trois voies est placée à l'un des embranchements de ladite branche de dérivation. De même, afin d'assurer un débit correct dans l'ensemble des voies du circuit, au moins une pompe de recirculation est disposée entre le secondaire de l'échangeur de la pompe à chaleur et l'un des deux embranchements de la branche de dérivation.

Selon une possibilité propre à l'invention, le ballon de stockage de la branche de dérivation présente une capacité comprise entre 5 l et 80 l. Plus précisément, ledit ballon peut présenter, dans une hypothèse d'intégration à une installation de volume réduit, une capacité comprise entre 6 l et 12 l. Contrairement aux hypothèses de l'art antérieur, ce ballon d'eau chaude n'a pas besoin d'avoir un grand volume car il n'est pas destiné à produire de l'eau chaude sanitaire, mais à stocker de l'énergie, produite par la pompe à chaleur, qui est exploitée pour chauffer l'eau chaude sanitaire.

Il est en pratique possible d'utiliser un ballon ayant une capacité située entre 8 et 9 litres, ce qui permet de stocker l'énergie nécessaire à la production de 3 l d'eau chaude sanitaire pour les petits soutirages. L'intérêt de garder un ballon avec une faible capacité volumique, de manière à rester compact, est de pouvoir intégrer pratiquement toute l'installation - de production d'eau chaude de chauffage comme d'eau chaude sanitaire - dans un carter ou « habillage » de chaudière murale

En l'occurrence, selon les configurations de l'invention, et comme on le verra par la suite, le stockage d'énergie dans la branche de dérivation peut provenir soit en totalité de la pompe à chaleur, soit de l'énergie combinée de la pompe à chaleur et de la chaudière.

Quant à l'eau chaude sanitaire, la double possibilité d'obtenir l'énergie nécessaire de deux échangeurs distincts dépend en pratique du débit de soutirage et de la température atteinte dans l'échangeur additionnel. Ainsi, lorsque le débit de soutirage est faible et la température atteinte dans ledit échangeur additionnel est suffisante, il est possible de l'obtenir par le seul biais de l'énergie issue de la pompe à chaleur. Cette possibilité s'avère particulièrement intéressante sur un plan économique

A l'inverse, lors de forts soutirages, le stockage d'énergie via le ballon de stockage n'est en général pas suffisant pour réaliser un transfert d'énergie adéquat, sauf en cas de consigne de température relativement basse. Lors de ces forts soutirages, l'échangeur de la branche de dérivation ne permet d'augmenter la température de l'eau chaude sanitaire que d'un pourcentage limité du besoin total, le reste étant fourni par la chaudière via son échangeur instantané interne, pour aboutir à la température de consigne.

L'idée générale de l'invention est de permettre, via un pilotage approprié, d'optimiser à tout moment la régulation de la température de l'eau chaude sanitaire, de manière à pouvoir tirer le meilleur parti de l'énergie produite par la pompe à chaleur en profitant du gain lié au rendement énergétique supérieur à celui qu'offrent des moyens de chauffage plus traditionnels.

La solution mise en oeuvre va à présent être décrite en référence aux figures annexées, pour lesquelles :
- la figure 1 représente un schéma d'une première configuration des circuits hydrauliques de production d'eau chaude qui interagissent dans le cadre de la présente invention, à savoir le circuit d'eau de chauffage et le circuit d'eau chaude sanitaire, avec un échangeur additionnel à plaques relié à un ballon de stockage ;
- la figure 2 en montre une variante dans laquelle le positionnement du ballon change;
- la figure 3 illustre une configuration dans laquelle le ballon intègre l'échangeur additionnel et en constitue le primaire ; et
- la figure 4 représente encore une variante selon laquelle le ballon intègre l'échangeur additionnel et en constitue le secondaire.

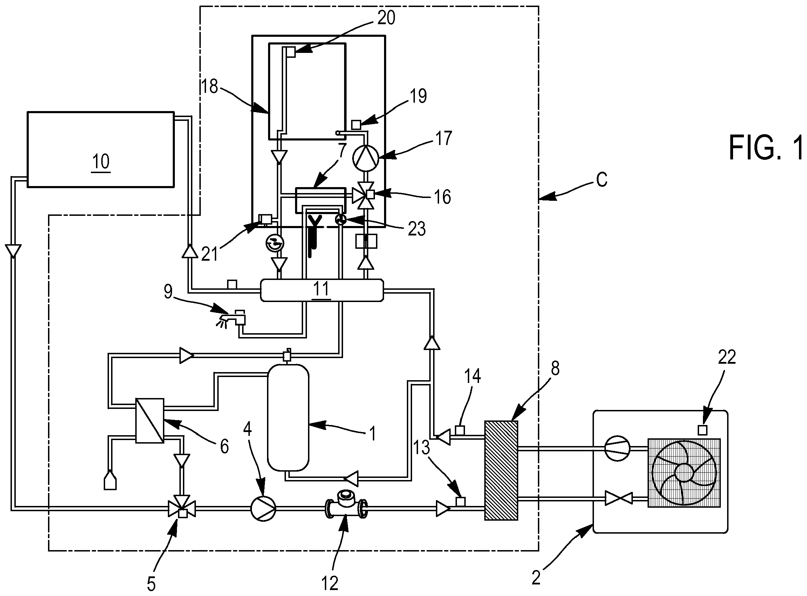

En référence à la figure 1, le stockage d'énergie est réalisé au moyen d'un ballon de stockage (1), disposé dans une branche de dérivation raccordée en parallèle à une branche comportant le circuit d'eau chaude de chauffage, et qui alimente le primaire d'un échangeur (6) additionnel à plaques dont la sortie est reliée à une vanne trois voies (5) qui contrôle la commutation entre les deux branches en parallèle.

Au secondaire de l'échangeur (6) de la branche de dérivation se trouve le circuit de production d'eau chaude sanitaire, qui aboutit finalement au moyen de distribution de cette eau vers les usagers, c'est-à-dire par exemple des robinets (9). Entre la sortie de cet échangeur (6) additionnel et le robinet (9), le circuit de production d'eau chaude sanitaire passe par un échangeur instantané (7) intégré à la chaudière (3). Comme cela a été évoqué auparavant, cet échangeur (7) n'est pas systématiquement utilisé, son activation dépendant en pratique du débit de soutirage de l'eau chaude sanitaire, de la température obtenue en sortie de l'échangeur additionnel, et enfin de la température de consigne. En résumé, en cas de faible soutirage et pour une température de consigne pas trop élevée, l'apport d'énergie via l'échangeur (6) additionnel de la branche de dérivation peut être suffisant pour obtenir la température souhaitée par l'utilisateur.

En cas de fort soutirage, la température de l'eau chaude sanitaire obtenue via cet échangeur (6) peut vite s'avérer insuffisante, et l'échangeur (7) est alors activé, de sorte que l'apport d'énergie se fait via ces deux sources consécutives, permettant aisément d'aboutir à une température de consigne élevée même par fort débit, tout en préservant un pourcentage d'énergie dû à la pompe à chaleur.

Pour le reste, le circuit hydraulique apparaissant dans les figures est classique : il s'agit d'un circuit hydraulique de chauffage comportant par conséquent, outre les radiateurs (10) constituant les émetteurs du circuit de chauffage, une chaudière (3), l'échangeur (8) de la pompe à chaleur (2), un collecteur hydraulique (11) disposé(e) en aval de l'échangeur (8) et de la chaudière (3), une pompe ou circulateur (4) en l'occurrence placée directement en aval de la vanne trois voies (5) et qui permet à titre principal une bonne circulation du fluide dans le circuit hydraulique de chauffage, et enfin un débitmètre (12).

Le circuit de chauffage se referme en boucle en aval de l'échangeur (6) additionnel de la branche de dérivation et en amont de l'échangeur (8) de la pompe à chaleur (2). Il est à noter que la chaudière (3) comporte un autre circulateur (voir figures suivantes référence (17)), d'où notamment la nécessité d'un collecteur (11) par exemple sous forme d'un tube à deux piquages.

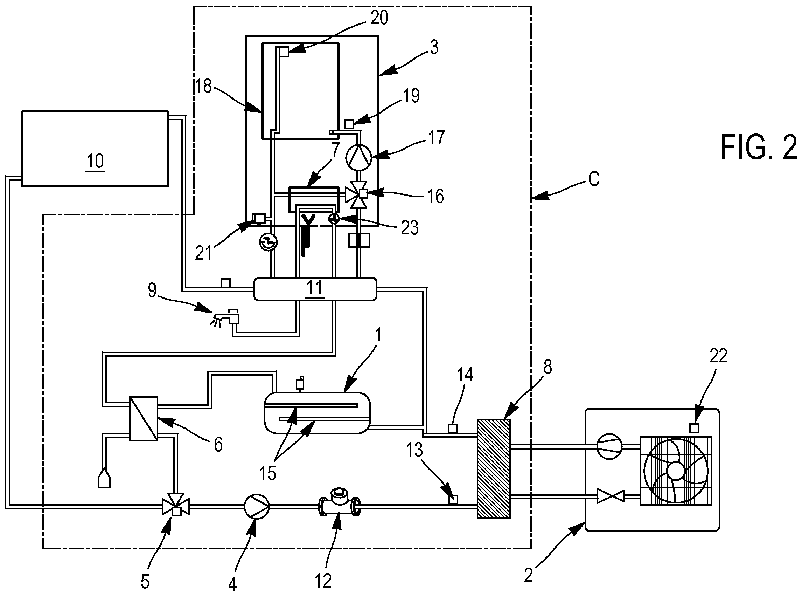

Des capteurs de température (13, 14) mesurent la température respectivement en entrée et en sortie du secondaire de l'échangeur (8) de la pompe à chaleur (2), qui dispose en outre d'un capteur (22) de la température de l'air extérieur. Le ballon (1), disposé verticalement en figure 1, est placé horizontalement et comporte des parois internes (15) limitant le mélange des strates d'eau dans le ballon (1) en figure 2.

La chaudière (3) comporte également une vanne trois voies (16) disposée en amont d'une pompe ou circulateur (17), raccordant la branche du circuit provenant du collecteur (11) à destination du boiler (18) et celle issue d'un embranchement à la sortie dudit boiler (18), en amont d'une soupape de sécurité (21) et du raccordement au collecteur (11). Des capteurs de température (19, 20) sont disposés respectivement à l'entrée et à la sortie du boiler (18). Un débitmètre (23) est par ailleurs disposé dans le circuit d'eau chaude sanitaire en entrée du secondaire de l'échangeur instantané (7) de la chaudière (3).

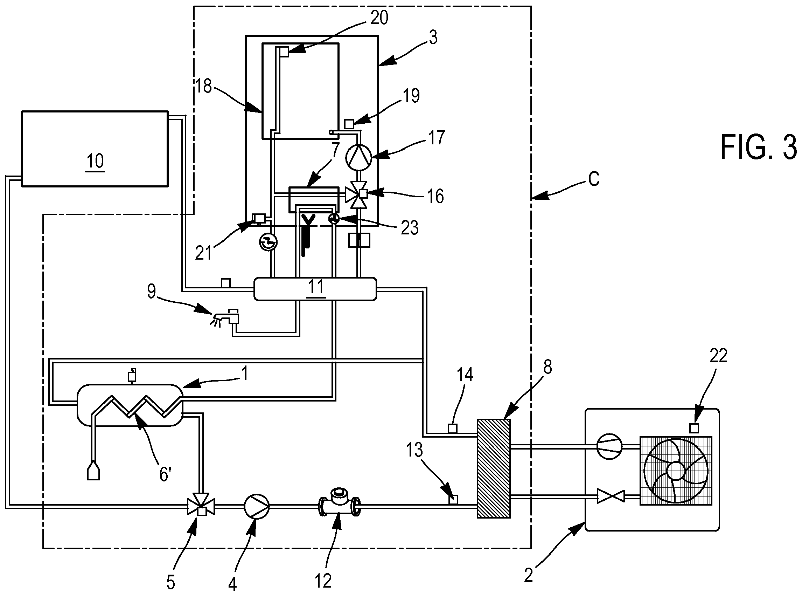

Dans les configurations suivantes, seul l'échangeur additionnel change. Ainsi, en figure 3, l'échangeur additionnel à plaques tel qu'apparaissant en figures 1 et 2 n'existe plus, le ballon (1) constituant en pratique le primaire d'un tel échangeur puisque le circuit de l'eau chaude sanitaire le traverse via une tubulure (6') par exemple constituée en serpentin et qui en forme le secondaire. Le ballon est alors directement raccordé entre la sortie de l'échangeur (8) de la pompe à chaleur (2) et la vanne trois voies (5).

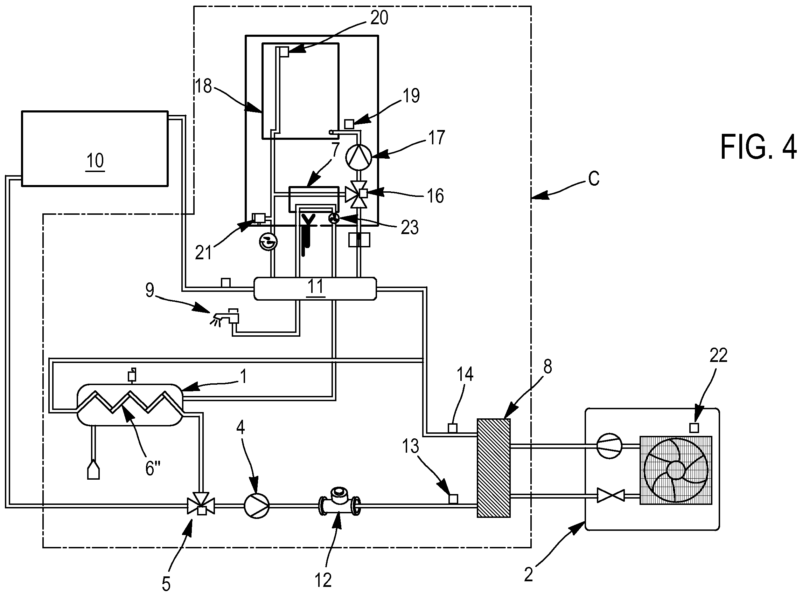

En figure 4, la configuration est inversée, et l'eau chaude sanitaire traverse le ballon (1) qui représente donc le secondaire de l'échangeur : elle est alors chauffée par une tubulure (6") par exemple constituée en serpentin qui en forme le primaire et est elle aussi raccordée entre la sortie de l'échangeur (8) de la pompe à chaleur (2) et la vanne trois voies (5).

Dans les configurations montrées dans ces figures, l'ensemble des composants des systèmes de chauffage hybrides, à la fois pour l'eau de chauffage et pour l'eau sanitaire, à l'exception de la partie externe de la pompe à chaleur (2) et des radiateurs (10), est de préférence intégré dans un carter (C) de chaudière par exemple murale, qui est représenté sur les figures par un trait interrompu qui englobe tout ce qui est interne à l'habillage cartérisé de ladite chaudière.

En fait, ce qui est mis en oeuvre au travers de cette invention, c'est l'utilisation du circuit hydraulique de chauffage comme circuit primaire pour aider au réchauffement du circuit de production d'eau chaude sanitaire placé dans un circuit secondaire.

L'ensemble est piloté de manière à réagir à des mesures notamment réalisées en aval, dans le circuit d'eau chaude sanitaire, pour mettre en oeuvre au mieux les possibilités de gains économiques permis par l'intégration de la pompe à chaleur dans le circuit d'eau chaude sanitaire.

L'invention n'est pas limitée aux exemples décrits auparavant, en référence aux figures, mais englobe au contraire des variantes de forme et de constitution qui sont dans la portée des revendications et dans les connaissances de l'homme de l'art.

## Revendications

1. Système hybride de production d'eau chaude sanitaire instantanée à partir de l'eau du réseau, comportant au moins un circuit hydraulique de production d'eau chaude de chauffage, un collecteur hydraulique, une pompe à chaleur, le primaire d'un échangeur additionnel et le secondaire d'un échangeur instantané (7) d'eau chaude sanitaire d'une chaudière (3), ladite chaudière (3) étant également utilisée dans un circuit hydraulique hybride de production d'eau chaude de chauffage pour un local, associée à la pompe à chaleur (2) via le collecteur hydraulique (11) placé en aval de la chaudière (3) et de la pompe à chaleur (2), une sortie du collecteur hydraulique (11) alimentant les émetteurs du circuit de chauffage (10) qui reboucle vers la pompe à chaleur (2), caractérisé en ce le système comporte le secondaire d'un échangeur additionnel (6) placé en série avec le secondaire de l'échangeur (7) de la chaudière (3), le primaire de l'échangeur additionnel (6) étant disposé dans une branche de dérivation du circuit hydraulique de production d'eau chaude de chauffage (10) comportant un ballon (1) de stockage d'eau chaude, ladite branche de dérivation étant raccordée au secondaire de l'échangeur (8) de la pompe à chaleur (2) en parallèle avec les émetteurs du circuit hydraulique de production d'eau chaude de chauffage (10).

2. Système hybride de production d'eau chaude sanitaire selon la revendication précédente, **caractérisé en ce que** le ballon (1) de stockage est placé en série avec le primaire de l'échangeur additionnel (6).

3. Système hybride de production d'eau chaude sanitaire selon la revendication précédente, **caractérisé en ce que** le ballon (1) de stockage est disposé horizontalement et comporte au moins une paroi interne (15) d'allure horizontale.

4. Système hybride de production d'eau chaude sanitaire selon l'une des revendications précédentes, **caractérisé en ce que** l'échangeur additionnel (6) est un échangeur à plaques.

5. Système hybride de production d'eau chaude sanitaire selon la revendication 1, **caractérisé en ce que** le ballon de stockage (1) de la branche de dérivation représente le primaire de l'échangeur additionnel, dont le secondaire est constitué d'une tubulure (6') se développant par exemple sous forme de serpentin en traversant ledit ballon (1).

6. Système hybride de production d'eau chaude sanitaire selon la revendication 1, **caractérisé en ce que** le ballon de stockage (1) de la branche de dérivation représente le secondaire de l'échangeur additionnel, dont le primaire est constitué d'une tubulure (6") se développant par exemple sous une forme de serpentin dans ledit ballon.

7. Système hybride de production d'eau chaude sanitaire selon l'une quelconque des revendications précédentes, **caractérisé en ce qu'**une vanne trois voies (5) est placée à l'un des embranchements de la branche de dérivation.

8. Système hybride de production d'eau chaude sanitaire selon l'une quelconque des revendications précédentes, **caractérisé en ce qu'**au moins une pompe de recirculation (4) est disposée entre le secondaire de l'échangeur (8) de la pompe à chaleur et l'un des deux embranchements de la branche de dérivation.

9. Système hybride de production d'eau chaude sanitaire selon l'une quelconque des revendications précédentes, **caractérisé en ce que** le ballon de stockage (1) de la branche de dérivation présente une capacité comprise entre 5 l et 80 l.

10. Système hybride de production d'eau chaude sanitaire selon la revendication précédente, **caractérisé en ce que** le ballon de stockage (1) de la branche de dérivation présente une capacité comprise entre 6 l et 12 l.

## Patentansprüche

1. Hybridsystem zur sanitären Durchlauf-Heißwassererzeugung ab dem Wasser des Netzes, aufweisend mindestens einen Hydraulikkreis für die Erzeugung von heißem Heizwasser, einen Hydraulikkollektor, eine Wärmepumpe, den Primärkreis eines zusätzlichen Tauschers und den Sekundärkreis eines Durchlauftauschers (7) von sanitärem Heißwasser eines Heizkessels (3), wobei der Heizkessel (3) ebenfalls in einem Hybridhydraulikkreis zur Heizungsheißwassererzeugung für einen Raum verwendet wird, zugeordnet der Wärmepumpe (2) über den Hydraulikkollektor (11), platziert nach dem Heizkessel (3) und der Wärmepumpe (2), wobei ein Ausgang des Hydraulikkollektors (11) die Strahler des Heizkreises (10) versorgt, der zur Wärmepumpe (2) zurückschleift, **dadurch gekennzeichnet, dass** das System den Sekundärkreis eines zusätzlichen Tauschers (6) aufweist, platziert in Reihe mit dem Sekundärkreis des Tauschers (7) des Heizkessels (3), wobei der Primärkreis des zusätzlichen Tauschers (6) in einem Umleitungsabzweig des Hydraulikkreises für die Erzeugung von heißem Heizwasser (10) angeordnet ist, aufweisend einen Heißwasserspeicherkessel (1), wobei der Umleitungsabzweig mit dem Sekundärkreis des Tauschers (8) der Wärmepumpe (2) parallel mit den Strahlern des Hydraulikkreis für die Erzeugung von heißem Heizwasser (10) verbunden ist.

2. Hybridsystem zur sanitären Heißwassererzeugung nach vorangehendem Anspruch, **dadurch gekennzeichnet, dass** der Speicherkessel (1) in Reihe mit dem Primärkreis des zusätzlichen Tauschers (6) platziert ist.

3. Hybridsystem zur sanitären Heißwassererzeugung nach vorangehendem Anspruch, **dadurch gekennzeichnet, dass** der Speicherkessel (1) horizontal angeordnet ist und mindestens eine horizontale Innenwand (15) aufweist.

4. Hybridsystem zur sanitären Heißwassererzeugung nach einem der vorangehenden Ansprüche, **dadurch gekennzeichnet, dass** der zusätzliche Tauscher (6) ein Plattentauscher ist.

5. Hybridsystem zur sanitären Heißwassererzeugung nach Anspruch 1, **dadurch gekennzeichnet, dass** der Speicherkessel (1) des Umleitungsabzweigs den Primärkreis des zusätzlichen Tauschers darstellt, dessen Sekundärkreis von einem Rohrstutzen (6') gebildet ist, der sich beispielsweise in Form einer Schlange bei Durchquerung des Kessels (1) entwickelt.

6. Hybridsystem zur sanitären Heißwassererzeugung nach Anspruch 1, **dadurch gekennzeichnet, dass** der Speicherkessel (1) des Umleitungsabzweigs den Sekundärkreis des zusätzlichen Tauschers darstellt, dessen Primärkreis von einem Rohrstutzen (6") gebildet ist, der sich beispielsweise in Form einer Schlange im Kessel entwickelt.

7. Hybridsystem zur sanitären Heißwassererzeugung nach einem der vorangehenden Ansprüche, **dadurch gekennzeichnet, dass** an einer der Abzweigungen des Umleitungsabzweigs ein Dreiwegeventil (5) platziert ist.

8. Hybridsystem zur sanitären Heißwassererzeugung nach einem der vorangehenden Ansprüche, **dadurch gekennzeichnet, dass** mindestens eine Rezirkulationspumpe (4) zwischen dem Sekundärkreis des Tauschers (8) der Wärmepumpe und einer der zwei Abzweigungen des Umleitungsabzweigs angeordnet ist.

9. Hybridsystem zur sanitären Heißwassererzeugung nach einem der vorangehenden Ansprüche, **dadurch gekennzeichnet, dass** der Speicherkessel (1) des Umleitungsabzweigs eine Kapazität zwischen 5 l und 80 l inklusive aufweist.

10. Hybridsystem zur sanitären Heißwassererzeugung nach vorangehendem Anspruch, **dadurch gekennzeichnet, dass** der Speicherkessel (1) des Umleitungsabzweigs eine Kapazität zwischen 6 l und 12 l inklusive aufweist.

## Claims

1. A hybrid system for producing instantaneous hot domestic supply water from the water grid, including at least one hydraulic circuit for producing hot water for heating, a hydraulic collector, a heat pump, the primary of an additional exchanger and the secondary of an instantaneous exchanger (7) for hot domestic supply water for a boiler (3), said boiler (3) also being used in a hybrid hydraulic circuit for producing hot water for heating a location, associated with the heat pump (2) via the hydraulic collector (11) placed downstream from the boiler (3) and the heat pump (2), an outlet of the hydraulic collector (11) supplying the emitters of the heating circuit (10) that loops back toward the heat pump (2), **characterized in that** the system includes the secondary of an additional exchanger (6) placed in series with the secondary of the exchanger (7) of the boiler (3), the primary of the additional exchanger (6) being positioned in a bypass branch of the hydraulic circuit for producing domestic heating water (10) including a hot water storage tank (1), said bypass branch being connected to the secondary of the exchanger (8) of the heat pump (2) in parallel with the emitters of the hydraulic heating hot water production circuit (10).

2. The hybrid system for producing hot domestic supply water according to the preceding claim, **characterized in that** the storage tank (1) is placed in series with the primary of the additional exchanger (6).

3. The hybrid system for producing hot domestic supply water according to the preceding claim, **characterized in that** the storage tank (1) is positioned horizontally and includes at least one horizontal inner wall (15).

4. The hybrid system for producing hot domestic supply water according to one of the preceding claims, **characterized in that** the additional exchanger (6) is a plate exchanger.

5. The hybrid system for producing hot domestic supply water according to claim 1, **characterized in that** the storage tank (1) of the bypass branch represents the primary of the additional exchanger, the secondary of which is made up of a tubing (6') developing for example in a serpentine form while traversing said tank (1).

6. The hybrid system for producing hot household supply water according to claim 1, **characterized in that** the storage tank (1) of the bypass branch represents the secondary of the additional exchanger, the primary of which is made up of a tubing (6") developing for example in a serpentine form in said tank.

7. The hybrid system for producing hot domestic supply water according to any one of the preceding claims, **characterized in that** a three-way valve (5) is placed at one of the forks of the bypass branch.

8. The hybrid system for producing hot domestic supply water according to any one of the preceding claims, **characterized in that** at least one recirculation pump (4) is positioned between the secondary of the exchanger (8) of the heat pump and one of the two forks of the bypass branch.

9. The hybrid system for producing hot domestic supply water according to any one of the preceding claims, **characterized in that** the storage tank (1) of the bypass branch has a capacity comprised between 5 l and 80 l.

10. The hybrid system for producing hot domestic supply water according to the preceding claim, **characterized in that** the storage tank (1) of the bypass branch has a capacity comprised between 6 l and 12 l.
